# EUROPEAN PATENT APPLICATION

(11) **EP 3 854 935 A1**
(43) Date of publication of application: **28.07.2021**
(21) Application number: 21152696.7
(22) Date of filing: 21.01.2021
(51) Int. Cl.: D06N 3/14

(54) **ARTIFICIAL LEATHER AND MANUFACTURING METHOD THEREOF**

(30) Priority: 22.01.2020 TW 109102654
(71) Applicant: San Fang Chemical Industry Co., Ltd., Kaohsiung City (TW)
(72) Inventor: LIN, CHIH-YI, Kaohsiung City (TW); CHENG, KUO-KUANG, Kaohsiung City (TW); YANG, KAO-LUNG, Kaohsiung City (TW); FU, YUNG-YU, Kaohsiung City (TW); KANG, PO-PING, Kaohsiung City (TW)
(74) Representative: 2K Patentanwälte Blasberg Kewitz & Reichel

(57) **Abstract**

The present disclosure is relates to an artifical leather (10) and a manufacturing method thereof. The artifical leather includes a substrate (11), a TPU adhering layer (12), a TPU layer (13) and a surface layer (14). The substrate includes a first surface (111) and a second surface (112). The TPU adhering layer is disposed on the first surface of the substrate. The TPU layer is disposed on the TPU adhering layer. The density of the TPU layer is 0.6-0.9 g/cm³. The surface layer is disposed on the TPU layer. By utilizing the above density, the artifical leather (10) of the present invention has high peeling strength to improve the property of the material. In addition, by using the TPU layer, the artifical leather of the present invention has a texture of leather.

## Description

### FIELD

The disclosure relates to an artificial leather and a manufacturing method thereof.

### BACKGROUND

In a conventional method for manufacturing artificial leathers, a plurality of complex manufacturing processes are commonly used, and in some of the manufacturing processes, a solvent needs to be used. The solvent is harmful to environment, and does not conform to requirements of environmental protection. In addition, a conventional material for manufacturing artificial leathers does not have a good peel strength, so that the entire peel strength of a conventional artificial leather is inadequate, causing a situation that the artificial leather is inapplicable to a leather product.

### SUMMARY OF THE INVENTION

In accordance with one aspect of the present disclosure, an artificial leather includes a substrate, a TPU (thermoplastic polyurethane) adhering layer, a TPU layer, and a surface layer. The substrate has a first surface and a second surface, the second surface is opposite to the first surface. The TPU adhering layer is disposed on the first surface of the substrate. The TPU layer is disposed on the TPU adhering layer, the density of the TPU layer is 0.6 g/cm³ to 0.9 g/cm³. The surface layer is disposed on the TPU layer.

In accordance with another aspect of the present disclosure, a manufacturing method of an artificial leather includes: providing a substrate, the substrate having a first surface and a second surface, the second surface opposite to the first surface; melt-blowing a TPU adhering layer on the first surface of the substrate, of which a melt-blown distance is 100-300 mm; melt-blowing a TPU layer on the TPU adhering layer, of which a melt-blown distance is 200-400 mm; hot-laminating the substrate, the TPU adhering layer, and the TPU layer; and laminating a surface layer on the TPU layer.

### BRIEF DESCRIPTION OF THE DRAWINGS

Aspects of the present disclosure are understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
FIG. 1 is a schematic structural diagram of an artificial leather according to an embodiment of the present application.
FIG. 2 is a schematic flowchart of a manufacturing method of an artificial leather according to an embodiment of the present application.

### DETAILED DESCRIPTION OF THE INVENTION

It is to be understood that the following disclosure provides many different embodiments or examples, for implementing different features of various embodiments. Specific examples of components and arrangements are described below to simplify the present disclosure. The present disclosure may, however, be embodied in many different forms and should not be construed as being limited to the embodiments set forth herein; rather, these embodiments are provided so that this description will be thorough and complete, and will fully convey the present disclosure to those of ordinary skill in the art. It will be apparent, however, that one or more embodiments may be practiced without these specific details.

In addition, the present disclosure may repeat reference numerals and/or letters in the various examples. This repetition is for the purpose of simplicity and clarity and does not in itself dictate a relationship between the various embodiments and/or configurations discussed.

It will be understood that when an element is referred to as being "on" another element, it can be directly on the other element or intervening elements may be present. In contrast, when an element is referred to as being "directly on" another element, there are no intervening elements present.

It will be understood that singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms; such as those defined in commonly used dictionaries, should be interpreted as having a meaning that is consistent with their meaning in the context of the relevant art and the present disclosure, and will not be interpreted in an idealized or overly formal sense unless expressly so defined herein.

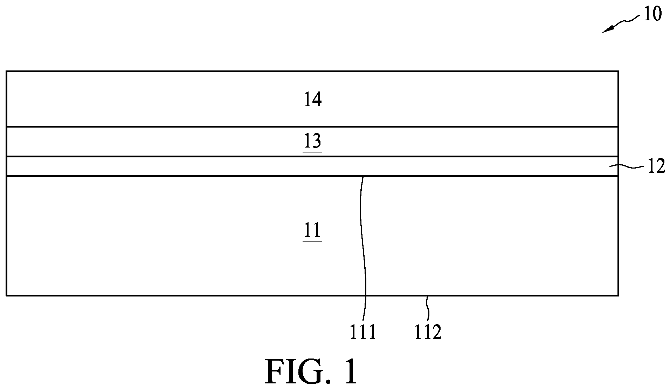

FIG. 1 is a schematic structural diagram of an artificial leather according to an embodiment of the present invention. An artificial leather 10 of the present invention includes: a substrate 11, a thermoplastic polyurethane (TPU) adhesive layer 12, a TPU layer 13 and a surface layer 14.

In an embodiment, the substrate 11 has a first surface 111 and a second surface 112, and the second surface 112 is opposite to the first surface 111. The substrate 11 may be a woven fabric, a non-woven fabric or a mesh, or a different material that is changed based on actual needs, to be accordant with actual application. In an embodiment, the substrate is at least a partial environment-friendly material, that is, a part of the substrate or an entirety of the substrate is the environment-friendly material. For example: a non-woven fabric is formed in a needle-punched manner, by entangling 100% recycled PET cotton or 60% recycled PET blended with 40% general PET. Alternatively, a woven fabric is formed by weaving 100% recycled PET fiber or general PET fiber.

In an embodiment, the TPU adhesive layer 12 is disposed on the first surface 111 of the substrate 11. The TPU adhesive layer 12 is disposed on the first surface 111 of the substrate 11, and the weight of the TPU adhesive layer 12 is 50 g/m² to 200 g/m². The thickness of the TPU adhesive layer 12 is 0.05 mm to 0.15 mm. In an embodiment, the thickness of the TPU adhesive layer 12 may be 0.10 mm.

In an embodiment, The TPU layer 13 is disposed on the TPU adhesive layer 12, and the density of the TPU layer 13 is 0.6 g/cm³ to 0.9 g/cm³. In addition, the weight of the TPU layer 13 is 100 g/m² to 300 g/m², and the thickness of the TPU layer 13 is 0.15 mm to 0.35 mm. In an embodiment, the thickness of the TPU layer 13 may be 0.25 mm.

In an embodiment, the surface layer 14 is disposed on the TPU layer 13. The surface layer 14 may be water-soluble polyurethane resin.

In an embodiment, the TPU layer 13 is disposed between the substrate 11 and the surface layer 14. A peel strength of the TPU layer 13 may be up to 3.0 Kg/cm to 10.0 Kg/cm because of a density design of the TPU layer 13. In addition, the entire peel strength of the artificial leather 10 may also be up to 3.0 Kg/cm to 10.0 Kg/cm.

Therefore, by using the density design of the TPU layer, the artificial leather 10 of the present invention may have a high peel strength, and material properties of the artificial leather 10 of the present invention may be improved. In addition, by using the TPU layer, the artificial leather 10 of the present invention may have a hand feeling of a leather.

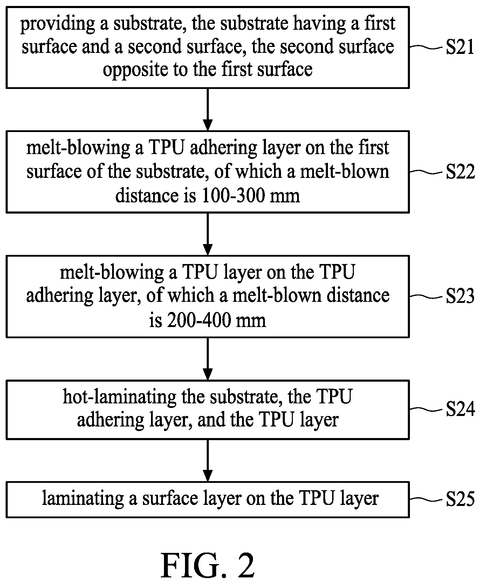

FIG. 2 is a schematic flowchart of a manufacturing method of an artificial leather according to an embodiment of the present invention. With reference to FIG. 1 and FIG. 2, first, referring to step S21, a substrate 11 is provided. The substrate 11 has a first surface 111 and a second surface 112, and the second surface 112 is opposite to the first surface 111. The substrate 11 may be a woven fabric, a non-woven fabric or a mesh, or a different material that is changed based on actual needs, to be accordant with actual application. In an embodiment, the substrate is at least a partial environment-friendly material, that is, a part of the substrate or an entirety of the substrate is the environment-friendly material. For example: a non-woven fabric is formed in a needle-punched manner, by entangling 100% recycled PET cotton or 60% recycled PET blended with 40% general PET. Alternatively, a woven fabric is formed by weaving 100% recycled PET fiber or general PET fiber.

Referring to step S22, a TPU adhesive layer 12 is melt-blown onto the first surface 111 of the substrate 11, a melt-blown distance of the TPU adhesive layer 12 is 100 mm to 300 mm, and the melt-blown distance is a distance between a first sprayer (not shown) and the first surface 111 of the substrate 11. The foregoing melt-blown distance may have preferable fiber distribution.

In an embodiment, in addition, in the step of melt-blowing the TPU adhesive layer 12, low-melting-point thermoplastic polyurethane (TPU) particles are used. A melting point of the low-melting-point TPU particles is 100°C to 150°C, a shore hardness of the low-melting-point TPU particles is 70 A to 90 A, and the low-melting-point TPU particles are dried at a set drying temperature for four hours, to make moisture content of the low-melting-point TPU particles below 100 ppm. The set drying temperature is 60°C to 80°C.

In an embodiment, in addition, a step of melting the TPU particles by using a first extruder (not shown) is included. A melting temperature of the first extruder is 80°C to 230°C, a head temperature is 210°C to 250°C, a DIE temperature is 240°C to 250°C, a spinning port hot air temperature is 220°C to 240°C, and a spinning pressure is controlled within 4.5 MPa to 10 Mpa. A melting point of the TPU adhesive layer 12 is 90°C to 130°C.

Referring to step S23, a TPU layer 13 is melt-blown onto the TPU adhesive layer 12, a melt-blown distance of the TPU layer 13 is 200 mm to 400 mm, and the melt-blown distance is a distance between a second sprayer (not shown) and the TPU adhesive layer 12. The foregoing melt-blown distance may have preferable fiber distribution.

In an embodiment, in addition, in the step of melt-blowing the TPU layer 13, thermoplastic polyurethane (TPU) particles are used. A melting point of the TPU particles is 150°C to 180°C, a shore hardness of the TPU particles is 70 A to 90 A, and the TPU particles are dried at a set drying temperature for four hours, to make moisture content of the TPU particles below 100 ppm. The set drying temperature is 80°C.

In an embodiment, in addition, a step of melting the TPU particles by using a second extruder (not shown) is used. A melting temperature of the second extruder is 90°C to 250°C, a head temperature is 210°C to 250°C, a DIE temperature is 240°C to 250°C, a spinning port hot air temperature is 250°C to 270°C, and a spinning pressure is controlled within 4.5 MPa to 10 Mpa. A melting point of the TPU layer 13 is 150°C to 220°C.

Referring to step S24, the substrate 11, the TPU adhesive layer 12 and the TPU layer 13 are hot-laminated. In an embodiment, a crawler-type laminator (not shown) is used for hot-lamination. A temperature of a preheat zone is 120°C to 130°C, a temperature of a compression zone is 130°C to 140°C, and an extruding pressure is 4 Kg/cm².

In an embodiment, a plurality of flat ironing wheels (not shown) are used for hot-lamination. The ironing wheels include a preheating wheel and a pressing wheel. A temperature of the preheating wheel is 110°C to 160°C, a temperature of the pressing wheel is 50°C, and an extruding gap is 0.3 mm to 0.8 mm.

Referring to step S25, a surface layer 14 is laminated onto the TPU layer 13. In an embodiment, the surface layer 14 is laminated to the TPU layer 13 by using a water-based paste or a high solid paste. The surface layer 14 may be polyurethane resin or water-soluble polyurethane resin. In an embodiment, the surface layer 14 is laminated to the TPU layer 13 by using a PU-type coating for surface coating.

Therefore, by using the manufacturing method of the artificial leather of the present invention, there is no need to use any solvent harmful to the environment to be accordant with requirements of environmental protection. In addition, the artificial leather 10 of the present invention can be manufactured by using a melt-blowing manufacturing process in the present invention, which streamlines the complex manufacturing process and saves time, and can improve manufacturing efficiency. Furthermore, preferable fiber distribution is implemented by using a melt-blown distance between the TPU adhesive layer 12 and the TPU layer 13, and thus the artificial leather 10 of the present invention can have a high peel strength, to improve material properties of the artificial leather 10 of the present invention. In addition, by using the TPU layer 13, the artificial leather 10 of the present invention can have a hand feeling of a leather.

### [Embodiment 1]

A non-woven fabric is formed to be a substrate 11 in a needle-punched manner, by entangling 100% recycled PET cotton or 60% recycled PET blended with 40% general PET.

Thermoplastic polyurethane (TPU) particles with a shore hardness of 70 A to 90 A, and a melting point of 100°C to 150°C are used, and are dried at a set drying temperature of 60°C for four hours, and then measured moisture content is below 100 ppm. Then, the TPU particles are melted by using a first extruder. Temperatures from a feed throat to an exit are sequentially 80°C, 120°C, 170°C, 190°C, 200°C and 210°C, a head temperature is 210°C, a DIE temperature is 210°C, a spinning port hot air temperature is 220°C, and a spinning pressure is controlled to be above 4.5 Mpa and below 10 Mpa. The TPU adhesive layer 12 is melt-blown and laid up onto the substrate 11 of the non-woven fabric in a fibrous manner, and a melt-blown distance between a first sprayer of the first extruder and the first surface 111 of the substrate 11 is 300 mm. An average fiber fineness with which the TPU adhesive layer 12 is melt-blown is about 10 µm, and the stack thickness of the TPU adhesive layer 12 is about 0.15 mm.

Thermoplastic polyurethane (TPU) particles with a shore hardness of 70 A to 90 A, and a melting point of 150°C to 180°C are used, and are dried at a set drying temperature of 80°C for four hours, and then measured moisture content is below 100 ppm. Then, the TPU particles are melted by using a second extruder. Temperatures from a feed throat to an exit are sequentially 90°C, 190°C, 210°C, 220°C, 230°C and 240°C, a head temperature is 240°C, a DIE temperature is 240°C, a spinning port hot air temperature is 250°C, and a spinning pressure is controlled to be above 4.5 Mpa and below 10 Mpa. The TPU layer 13 is melt-blown and laid up onto the TPU adhesive layer 12 in a fibrous manner, and a melt-blown distance between a second sprayer of the second extruder and the TPU adhesive layer 12 is 250 mm. 80% of a fiber fineness distribution amount with which the TPU layer 13 is melt-blown is between 5 µm and 30 µm, and the stack thickness of the TPU layer 13 is about 0.25 mm to 0.35 mm. The density of the TPU layer 13 is 0.6 g/cm³ to 0.9 g/cm³.

A laid up three-layer structure (the substrate 11, the TPU adhesive layer 12 and the TPU layer 13) is compounded by a crawler-type laminator. A temperature of a preheat zone is 120°C, a temperature of a compression zone is 130°C, an extruding pressure is 4 Kg/cm², and a production speed is 5 m/min.

A water-based paste together with water-soluble polyurethane resin is used as a surface layer 14, to be laminated to the compounded three-layer structure, to manufacture an artificial leather. A peel strength test shows that peel strengths of the artificial leathers of the present invention are all above 3 Kg/cm.

### [Embodiment 2]

A non-woven fabric is formed to be a substrate 11 in a needle-punched manner, by entangling 100% recycled PET cotton or 60% recycled PET blended with 40% general PET.

Thermoplastic polyurethane (TPU) particles with a shore hardness of 70 A to 90 A, and a melting point of 100°C to 150°C are used, and are dried at a set drying temperature of 80°C for four hours, and then measured moisture content is below 100 ppm. Then, the TPU particles are melted by using a first extruder. Temperatures from a feed throat to an exit are sequentially 80°C, 180°C, 200°C, 210°C, 220°C and 230°C, a head temperature is 230°C, a DIE temperature is 230°C, a spinning port hot air temperature is 240°C, and a spinning pressure is controlled to be above 4.5 Mpa and below 10 Mpa. The TPU adhesive layer 12 is melt-blown and laid up onto the substrate 11 of the non-woven fabric in a fibrous manner, and a melt-blown distance between a first sprayer of the first extruder and the first surface 111 of the substrate 11 is 300 mm. An average fiber fineness with which the TPU adhesive layer 12 is melt-blown is about 10 µm, and the stack thickness of the TPU adhesive layer 12 is about 0.15 mm.

Thermoplastic polyurethane (TPU) particles with a shore hardness of 70 A to 90 A, and a melting point of 150°C to 180°C are used, and are dried at a set drying temperature of 80°C for four hours, and then measured moisture content is below 100 ppm. Then, the TPU particles are melted by using a second extruder. Temperatures from a feed throat to an exit are sequentially 90°C, 200°C, 220°C, 230°C, 240°C and 250°C, a head temperature is 250°C, a DIE temperature is 250°C, a spinning port hot air temperature is 260°C, and a spinning pressure is controlled to be above 4.5 Mpa and below 10 Mpa. The TPU layer 13 is melt-blown and laid up onto the TPU adhesive layer 12 in a fibrous manner, and a melt-blown distance between a second sprayer of the second extruder and the TPU adhesive layer 12 is 250 mm. 80% of a fiber fineness distribution amount with which the TPU layer 13 is melt-blown is between 5 µm and 30 µm, and the stack thickness of the TPU layer 13 is about 0.25 mm to 0.35 mm. The density of the TPU layer 13 is 0.6 g/cm³ to 0.9 g/cm³.

A laid up three-layer structure (the substrate 11, the TPU adhesive layer 12 and the TPU layer 13) is compounded by flat ironing wheels. The temperatures of preheating wheels are 110°C and 140°C, a temperature of a pressing wheel is 50°C, a extruding gap is 0.75 mm, and a production speed is 9 m/min.

A high solid paste together with water-soluble polyurethane resin is used as a surface layer 14, to be laminated to the compounded three-layer structure, to manufacture an artificial leather. A peel strength test shows that peel strengths of the artificial leathers of the present invention are all above 3 Kg/cm.

### [Embodiment 3]

A woven fabric is formed to be a substrate 11, by using 100% recycled PET or general PET.

Thermoplastic polyurethane (TPU) particles with a shore hardness of 70 A to 90 A, and a melting point of 100°C to 150°C are used, and are dried at a set drying temperature of 70°C for four hours, and then measured moisture content is below 100 ppm. Then, the TPU particles are melted by using a first extruder. Temperatures from a feed throat to an exit are sequentially 80°C, 130°C, 180°C, 200°C, 215°C and 230°C, a head temperature is 230°C, a DIE temperature is 230°C, a spinning port hot air temperature is 240°C, and a spinning pressure is controlled to be above 4.5 Mpa and below 10 Mpa. The TPU adhesive layer 12 is melt-blown and laid up onto the substrate 11 of the non-woven fabric in a fibrous manner, and a melt-blown distance between a first sprayer of the first extruder and the first surface 111 of the substrate 11 is 300 mm. An average fiber fineness with which the TPU adhesive layer 12 is melt-blown is about 10 µm, and the stack thickness of the TPU adhesive layer 12 is about 0.15 mm.

Thermoplastic polyurethane (TPU) particles with a shore hardness of 70 A to 90 A, and a melting point of 150°C to 180°C are used, and are dried at a set drying temperature of 80°C for four hours, and then measured moisture content is below 100 ppm. Then, the TPU particles are melted by using a second extruder. Temperatures from a feed throat to an exit are sequentially 90°C, 190°C, 210°C, 225°C, 240°C and 250°C, a head temperature is 250°C, a DIE temperature is 250°C, a spinning port hot air temperature is 260°C, and a spinning pressure is controlled to be above 4.5 Mpa and below 10 Mpa. The TPU layer 13 is melt-blown and laid up onto the TPU adhesive layer 12 in a fibrous manner, and a melt-blown distance between a second sprayer of the second extruder and the TPU adhesive layer 12 is 250 mm. 80% of a fiber fineness distribution amount with which the TPU layer 13 is melt-blown is between 5 µm and 30 µm, and the stack thickness of the TPU layer 13 is about 0.25 mm to 0.35 mm. The density of the TPU layer 13 is 0.6 g/cm³ to 0.9 g/cm³.

A laid up three-layer structure (the substrate 11, the TPU adhesive layer 12 and the TPU layer 13) is compounded by a crawler-type laminator. A temperature of a preheat zone is 130°C, a temperature of a compression zone is 140°C, an extruding pressure is 4 Kg/cm², and a production speed is 9 m/min.

A high solid paste together with water-soluble polyurethane resin is used as a surface layer 14, to be laminated to the compounded three-layer structure, to manufacture an artificial leather. A peel strength test shows that peel strengths of the artificial leathers of the present invention are all above 3 Kg/cm.

### [Embodiment 4]

A woven fabric is formed to be a substrate 11, by using 100% recycled PET or general PET.

Thermoplastic polyurethane (TPU) particles with a shore hardness of 70 A to 90 A, and a melting point of 100°C to 150°C are used, and are dried at a set drying temperature of 80°C for four hours, and then measured moisture content is below 100 ppm. Then, the TPU particles are melted by using a first extruder. Temperatures from a feed throat to an exit are sequentially 80°C, 180°C, 200°C, 210°C, 220°C and 230°C, a head temperature is 230°C, a DIE temperature is 230°C, a spinning port hot air temperature is 240°C, and a spinning pressure is controlled to be above 4.5 Mpa and below 10 Mpa. The TPU adhesive layer 12 is melt-blown and laid up onto the substrate 11 of the non-woven fabric in a fibrous manner, and a melt-blown distance between a first sprayer of the first extruder and the first surface 111 of the substrate 11 is 300 mm. 80% of a fiber fineness distribution amount with which the TPU adhesive layer 12 is melt-blown is between 5 µm and 30 µm, and the stack thickness of the TPU adhesive layer 12 is between 0.25 mm to 0.35 mm.

Thermoplastic polyurethane (TPU) particles with a shore hardness of 70 A to 90 A, and a melting point of 150°C to 180°C are used, and are dried at a set drying temperature of 80°C for four hours, and then measured moisture content is below 100 ppm. Then, the TPU particles are melted by using a second extruder. Temperatures from a feed throat to an exit are sequentially 90°C, 200°C, 220°C, 230°C, 240°C and 250°C, a head temperature is 250°C, a DIE temperature is 250°C, a spinning port hot air temperature is 260°C, and a spinning pressure is controlled to be above 4.5 Mpa and below 10 Mpa. The TPU layer 13 is melt-blown and laid up onto the TPU adhesive layer 12 in a fibrous manner, and a melt-blown distance between a second sprayer of the second extruder and the TPU adhesive layer 12 is 300 mm. 80% of a fiber fineness distribution amount with which the TPU layer 13 is melt-blown is between 5 µm and 30 µm, and the stack thickness of the TPU layer 13 is about 0.25 mm to 0.35 mm. The density of the TPU layer 13 is 0.6 g/cm³ to 0.9 g/cm³.

A laid up three-layer structure (the substrate 11, the TPU adhesive layer 12 and the TPU layer 13) is compounded by flat ironing wheels. The temperatures of preheating wheels are 110°C, 140°C, a temperature of a pressing wheel is 50°C, an extruding gap is 0.75 mm, and a production speed is 9 m/min.

A high solid paste together with water-soluble polyurethane resin is used as a surface layer 14, to be laminated to the compounded three-layer structure, to manufacture an artificial leather. A peel strength test shows that peel strengths of the artificial leathers of the present invention are all above 3 Kg/cm.

Moreover, the scope of the present application is not intended to be limited to the particular embodiments of the process, machine, manufacture, and composition of matter, means, methods and steps described in the specification. As those skilled in the art will readily appreciate form the present disclosure, processes, machines, manufacture, compositions of matter, means, methods, or steps, presently existing or later to be developed, that perform substantially the same function or achieve substantially the same result as the corresponding embodiments described herein may be utilized in accordance with some embodiments of the present disclosure.

Accordingly, the appended claims are intended to include within their scope such processes, machines, manufacture, and compositions of matter, means, methods or steps. In addition, each claim constitutes a separate embodiment, and the combination of various claims and embodiments are within the scope of the invention.

## Claims

1. An artificial leather (10), comprising:
a substrate (11), having a first surface (111) and a second surface (112), the second surface opposite to the first surface;
a thermoplastic polyurethane, TPU, adhering layer (12), disposed on the first surface (111) of the substrate;
a TPU layer (13), disposed on the TPU adhering layer, the density of the TPU layer is 0.6 g/cm³ to 0.9 g/cm³; and
a surface layer (14), disposed on the TPU layer.

2. The artificial leather (10) of claim 1, wherein the weight of the TPU adhesive layer (12) is 50 g/m² to 200 g/m².

3. The artificial leather (10) of claim 1 or 2, wherein the weight of the TPU layer (13) is 100 g/m² to 300 g/m²,

4. The artificial leather (10) of one of the preceding claims, wherein the substrate (11) is a woven fabric, a non-woven fabric, or a mesh.

5. The artificial leather (10) of claim 4, wherein the substrate (11) is at least a partial environment-friendly material.

6. The artificial leather (10) of one of the preceding claims, wherein the surface layer (14) is polyurethane resin.

7. The artificial leather (10) of one of the preceding claims, wherein the peeling strength of the artificial leather is 3.0 Kg/cm to 10.0 Kg/cm..

8. The artificial leather (10) of one of the preceding claims, wherein the thickness of the TPU adhesive layer (12) is 0.05 mm to 0.15 mm, and the thickness of the TPU layer (13) is 0.15 mm to 0.35 mm.

9. A manufacturing method of an artificial leather (10), comprising:
(S21): providing a substrate (11), the substrate having a first surface (111) and a second surface (112), the second surface opposite to the first surface;
(S22): melt-blowing a TPU adhering layer (12) on the first surface of the substrate, of which a melt-blown distance is 100-300 mm;
(S23): melt-blowing a TPU layer (13) on the TPU adhering layer, of which a melt-blown distance is 200-400 mm;
(S24): hot-laminating the substrate (11), the TPU adhering layer (12), and the TPU layer (14); and
(S25): laminating a surface layer (14) on the TPU layer.

10. The manufacturing method of claim 9, wherein in the step (S22) of melt-blowing the TPU adhering layer (12), low-melting-point thermoplastic polyurethane (TPU) particles are used, a melting point of the low-melting-point TPU particles is 100°C to 150°C, a shore hardness of the low-melting-point TPU particles is 70 A to 90 A, and the low-melting-point TPU particles are dried at a set drying temperature for four hours, to make moisture content of the low-melting-point TPU particles below 100 ppm; and a first extruder is used, the melting temperature of the first extruder are 80°C to 230°C, a head temperature is 210°C to 230°C, a DIE temperature is 210°C to 230°C, a spinning port hot air temperature is 220°C to 240°C, and a spinning pressure is controlled within 4.5 MPa to 10 Mpa.

11. The manufacturing method of claim 9 or 10, wherein in the step (S23) of melt-blowing the TPU layer (13), thermoplastic polyurethane (TPU) particles are used, a melting point of the TPU particles is 150°C to 180°C, a shore hardness of the TPU particles is 70 A to 90 A, and the TPU particles are dried at a set drying temperature for four hours, to make moisture content of the TPU particles below 100 ppm; and a second extruder is used, the melting temperatures of the second extruder is 90°C to 250°C, a head temperature is 210°C to 250°C, a DIE temperature is 240°C to 250°C, a spinning port hot air temperature is 250°C to 270°C, and a spinning pressure is controlled within 4.5 MPa to 10 Mpa.

12. The manufacturing method of one of claims 9-11, wherein in the hot-laminating step (S24), a crawler-type laminator is used for hot-lamination, a temperature of a preheat zone is 120°C to 130°C, a temperature of a compression zone is 130°C to 140°C, and an extruding pressure is 4 Kg/cm².

13. The manufacturing method of one of claims 9-12, wherein in the hot-laminating step (S24), a plurality of flat ironing wheels are used for hot-lamination, the ironing wheels comprise preheating wheels and a pressing wheel, the temperatures of the preheating wheels are 110°C to 160°C, a temperature of the pressing wheel is 50°C, and an extruding gap is 0.75 mm.

14. The manufacturing method of one of claims 9-13, wherein in the step of laminating (S25) the surface layer (14), the surface layer is laminated to the TPU layer (13) by using a PU-type coating for surface coating.

15. The manufacturing method of one of claim 9-14, wherein a melting point of the TPU adhesive layer (12) is 90°C to 130°C, and a melting point of the TPU layer (13) is 150°C to 220°C.
